# EUROPÄISCHE PATENTSCHRIFT

(11) **EP 1 328 770 B1**
(45) Veröffentlichungstag und Bekanntmachung des Hinweises auf die Patenterteilung: **13.05.2009**
(21) Anmeldenummer: 01960721.7
(22) Anmeldetag: 04.09.2001
(51) Int. Cl.: G01B 7/16, G05B 19/404

(54) **VORRICHTUNG ZUR ERFASSUNG EINER THERMISCH BEDINGTEN LÄNGENAUSDEHNUNG EINES MASCHINENTEILS**
DEVICE FOR DETECTING A THERMAL LINEAR DILATION ON PART OF A MACHINE
DISPOSITIF POUR SAISIR UNE DILATATION THERMIQUE LINEAIRE SUR UNE PARTIE D'UNE MACHINE

(30) Priorität: 07.10.2000 DE 10049718
(43) Veröffentlichungstag der Anmeldung: 23.07.2003
(73) Patentinhaber: Dr. Johannes Heidenhain GmbH, 83292 Traunreut (DE)
(72) Erfinder: BRAASCH, Jan, 83308 Trostberg (DE); MÜLLER, Josef, 84489 Burghausen (DE); SEICHTER, Martin, 83368 St. Georgen (DE)
(86) Internationale Anmeldenummer: PCT/EP2001/010137
(87) Internationale Veröffentlichungsnummer: WO 2002/031434

(56) Entgegenhaltungen:
- WO-A-99/36757
- DE-A- 19 643 383
- US-A- 4 428 976
- US-A- 4 748 858
- RAJANNA K ET AL: "STRAIN-SENSITIVE PROPERTY OF VACUUM EVAPORATED MANGANESE FILMS" THIN SOLID FILMS, ELSEVIER-SEQUOIA S.A. LAUSANNE, CH, Bd. 172, Nr. 1, 1. Mai 1989 (1989-05-01), Seiten 45-50, XP000187678 ISSN: 0040-6090

## Beschreibung

Die Erfindung betrifft eine Vorrichtung zur Erfassung einer thermisch bedingten Längenausdehnung eines Maschinenteils, etwa einer Werkzeugmaschine.

Beim Betrieb einer Werkzeugmaschine entsteht beispielsweise durch die Reibung einer sich drehenden Spindel Wärme, die zu thermischer Ausdehnung der erwärmten Maschinenteile und so zu Ungenauigkeiten in den Abmessungen des bearbeiteten Werkstückes führen kann. Sind die Ausdehnungen bekannt, kann durch entsprechende Nachregelung eine verbesserte Maßhaltigkeit des Werkstückes erzielt werden.

Die DE 3822873 C1 beschreibt eine Vorrichtung zum Messen und Ausgleichen thermisch bedingter Längenausdehnungen an Maschinen, insbesondere Werkzeugmaschinen. Dabei wird der elektrische Widerstand eines Temperatursensors aus Platin, der in thermischem Kontakt mit einem Bereich des Maschinenteils steht, als Maß für die thermische Längenausdehnung des Maschinenteils in diesem Bereich verwendet. Es wird die Tatsache ausgenutzt, daß sowohl die Änderung des elektrischen Widerstandes eines metallischen Leiters als auch die Längenausdehnung eines Maschinenteils in einem Bereich von ca. 0 - 100°C in guter Näherung lineare Funktionen der Temperatur sind. Auch bei einer Temperaturverteilung längs des vom Temperatursensor erfaßten Bereiches des Maschinenteiles ist dann die Längenausdehnung des Maschinenteiles eine in guter Näherung lineare Funktion des elektrischen Widerstandes des Temperatursensors.

Aufgabe der Erfindung ist es, eine Vorrichtung zum Erfassen der thermisch bedingten Längenausdehnung eines Maschinenteils anzugeben, die kostengünstig zu fertigen und flexibel einsetzbar ist.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Erfindungsgemäß besteht ein Temperatursensor zum Erfassen der mittleren Temperatur längs der Ausdehnungsrichtung eines Maschinenteiles aus einem ersten metallischen Leiter, der auf dem zu überwachenden Bereich angeordnet ist, sowie weiteren metallischen Leitern, die als Trimmbahnen ebenfalls auf dem zu überwachenden Bereich angeordnet sind, und die die gleiche Temperaturverteilung wie der erste metallische Leiter erfassen. Über elektrische Verbindungen kann der Gesamtwiderstand des Temperatursensors so kalibriert werden, daß auch bei einer großen Prozeßstreuung in der Herstellung des Temperatursensors dieser auf einen gewünschten Wert kalibriert werden kann, etwa auf den Industriestandard PT100 (100 Ω bei 0°C).

Eine besonders kostengünstige Variante ergibt sich, wenn der Temperatursensor in üblicher Leiterplattentechnologie aufgebaut wird. Dabei werden Kupferbahnen auf einem Leiterplattensubstrat vorgesehen, die untereinander über Lötbrücken verschaltet werden können um einen geforderten Widerstandswert zu erzielen.

Weitere Vorteile sowie Einzelheiten der vorliegenden Erfindung ergeben sich aus der nachfolgenden Beschreibung bevorzugter Ausführungsformen anhand der Figuren. Dabei zeigt
- Figur 1: einen Temperatursensor zur Erfassung der Temperatur längs einer Ausdehnungsrichtung
- Figur 2: ein Anwendungsbeispiel solcher Temperatursensoren

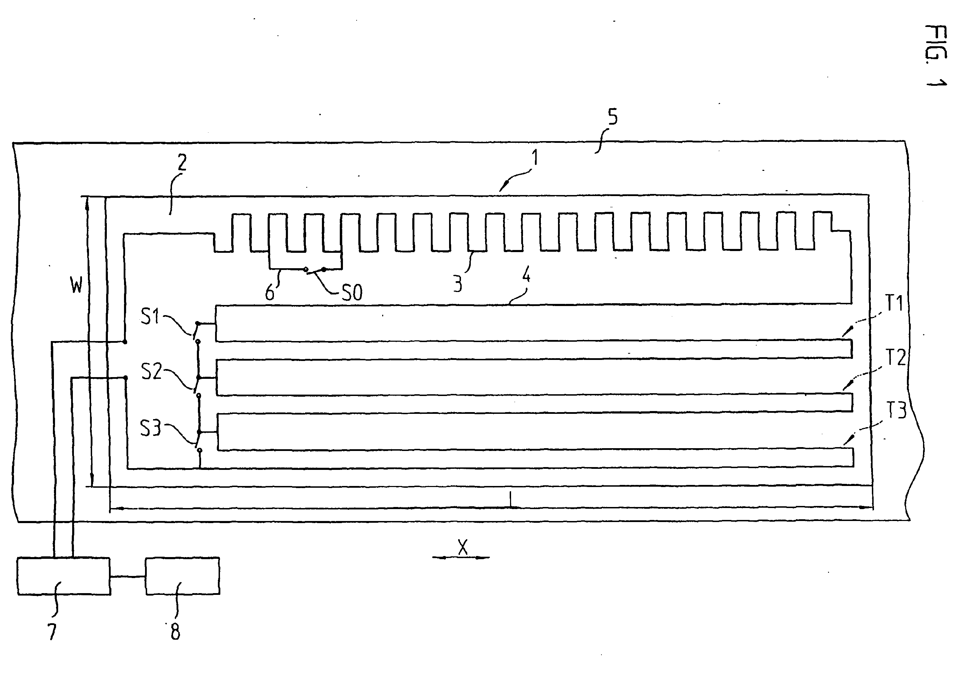

Eine erste einfache Ausführungsform einer Vorrichtung zur Erfassung einer thermisch bedingten Längenausdehnung zeigt Figur 1. Ein Temperatursensor 1 besteht aus einem Leiterplattensubstrat 2, das einen ersten metallischen Leiter 3 in Form einer mäanderförmigen Kupferbahn mit Rückleitungsbahn 4 trägt. Der erste metallische Leiter 3 habe einen elektrischen Widerstand von R0. Über als unterbrochene Kupferbahnen ausgebildete Schalter S1 - SN können die ebenfalls aus Kupferbahnen bestehenden, zum ersten metallischen Leiter 1 in Serie geschalteten Trimmbahnen T1 - TN mit einem Widerstand von R1 - RN einzeln mittels eines Lötpunktes kurzgeschlossen werden. Der Gesamtwiderstand des Temperatursensors 1 verringert sich dabei jeweils um den Widerstand R1 - RN der kurzgeschlossenen Trimmbahn T1 - TN.

Vorteilhafterweise verdoppelt sich der Widerstandswert R1 - RN der einzelnen Trimmbahnen T1 - TN jeweils, so daß RN+1 = 2 * RN gilt. Für einen Temperatursensor 1 dieser Art ergibt sich so ein Widerstandswert zwischen R0 (alle Trimmbahnen T1 - TN kurzgeschlossen) und R0+R1+R2+...+RN (alle Trimmbahnen T1 - TN aktiviert), wobei Zwischenwerte mit einer Schrittweite von R1 eingestellt werden können.

Der Temperatursensor 1 hat eine Länge L in Richtung seines ersten metallischen Leiters 3 und seiner Trimmbahnen T1 - TN. Die Weite W des Temperatursensors 1 ist dazu verhältnismäßig klein, ein Verhältnis von L/W größer als 20 ist sinnvoll, da mit dem Temperatursensor 1 ein Temperaturprofil in einer Ausdehnungsrichtung X erfaßt werden soll.

Um zwischen der mit dem Temperatursensor 1 ermittelten Temperatur und der Längenausdehnung eines Maschinenteiles 5 eine gute Korrelation zu bekommen, ist es wichtig, daß sowohl die erste metallische Struktur 3, als auch die Trimmbahnen T1 - TN das gleiche Temperaturprofil erfassen. Ist dies nicht der Fall, kann der Widerstand des Temperatursensors 1 kein gutes Maß für die mittlere Temperatur längs des überwachten Bereiches des Maschinenteiles 5 sein.

Trimmbahnen T1 - TN mit kleinen Widerständen über die ganze Länge L des Temperatursensors 1 müssen sehr breit ausgelegt werden und benötigen viel Platz. Um die Weite W des Temperatursensors 1 dennoch klein zu halten, kann eine Abgleichmöglichkeit mit sehr kleinen Widerständen alternativ auch als optionale Überbrückungen 6 von Windungen des mäanderförmigen ersten metallischen Leiters 3 ausgeführt werden, die über elektrische Verbindungen S0 geschaltet werden. Bei der Auslegung der Anordnung ist der Widerstand der optionalen Überbrückung 6 als Parallelschaltung zu den überbrückten Windungen des ersten metallischen Leiters 3 zu berücksichtigen. Es ist aus oben genanntem Grund darauf zu achten, daß nicht mehr als ca. 10% des Endwiderstandes des kalibrierten Temperatursensors von Strukturen stammen, die nicht das gesamte Temperaturprofil erfassen.

In einer besonders vorteilhaften Ausführungsform wird ein Temperatursensor 1 auf einem herkömmlichen flexiblen Leiterplattensubstrat 2 (kupferkaschiertes Glashartgewebe auf Epoxydharzbasis) der Dicke 0,3mm realisiert. Die Dicke der Kupferschicht beträgt dabei 5µm. Der Widerstand des unkalibrierten Temperatursensors beträgt ca. 132 Ω mit einer Toleranz von +/-12%. Diese Toleranz ist vor allem auf Dickenschwankungen der Kupferschicht dieses preisgünstig erhältlichen Ausgangsmaterials zurückzuführen. Es stehen weiter acht Möglichkeiten zum Abgleich des Temperatursensors 1 zur Verfügung, von denen drei mit den Widerstandswerten 4 Ω, 8 Ω und 16 Ω als Trimmbahnen T1, T2, T3 ausgebildet sind. Die übrigen fünf Abgleichmöglichkeiten sind durch optionale Überbrückungen 6 verschiedener Teile des mäanderförmigen ersten metallischen Leiters realisiert und erlauben die Reduzierung des Gesamtwiderstandes um 2 Ω, 1Ω, 0,5 Ω, 0,25 Ω und 0,125 Ω. Man erhält so 256 Kombinationsmöglichkeiten mit einer Abstufung von 0,125 Ω.

Der Gesamtwiderstand nach der Kalibrierung des Temperatursensors 1 soll 116,3 Ω bei 20°C betragen. Durch die Parallelschaltung eines externen Widerstandes zum Temperatursensor 1 kann der Temperaturkoeffizient des Temperatursensors 1 (er entspricht zunächst dem Temperaturkoeffizienten des verwendeten Kupfermaterials) dem eines Platinsensors angenähert werden, und gleichzeitig der Widerstand der Anordnung auf den PT100 - Wert von 107,8 Ω bei 20°C gesenkt werden. Die Auswertung dieses Sensors kann nun über eine auf PT100 - Verhalten geeichte Auswerteelektronik 7 erfolgen, die als Standardkomponente günstig erhältlich ist.

Im ungünstigsten Fall hat der Gesamtwiderstand dieses Temperatursensors 1 einen Anteil von ca. 3.5 %, der nicht vom gesamten Temperaturprofil längs der Länge L des Temperatursensors abhängt. Die Längenausdehnung des Maschinenteiles 5 läßt sich damit hinreichend genau berechnen.

Der Widerstandswert des Temperatursensors 1 wird von einer Auswerteelektronik 7 gemessen, die daraus die Längenausdehnung des Maschinenteils 5 berechnet und diesen an die Steuerung 8 der Werkzeugmaschine übergibt. Die Steuerung 8 kann nun bei Bedarf die Längenausdehnung durch korrigierte Positionierungsbefehle an die Werkzeugmaschine ausgleichen.

Zur Ausführung der Trimmbahnen T1 - TN sei noch erwähnt, daß diese nicht nur wie in Figur 1 gezeichnet als in Serie mit dem ersten metallischen Leiter 3 geschaltete Widerstandsbahnen mit einer Möglichkeit zur Überbrückung durch elektrische Verbindungen S1 - SN ausgeführt werden können, es sind z.B. auch Widerstandsbahnen denkbar, die zur Kalibrierung nachträglich parallel zum ersten metallischen Leiter 3 geschaltet werden können. In beiden Varianten ist es möglich, die elektrischen Verbindungen wie beschrieben als Lötbrücken auszuführen, aber auch Drahtbrücken, 0Ω - Widerstände oder durchtrennbare Leiterbahnstücke sind denkbar.

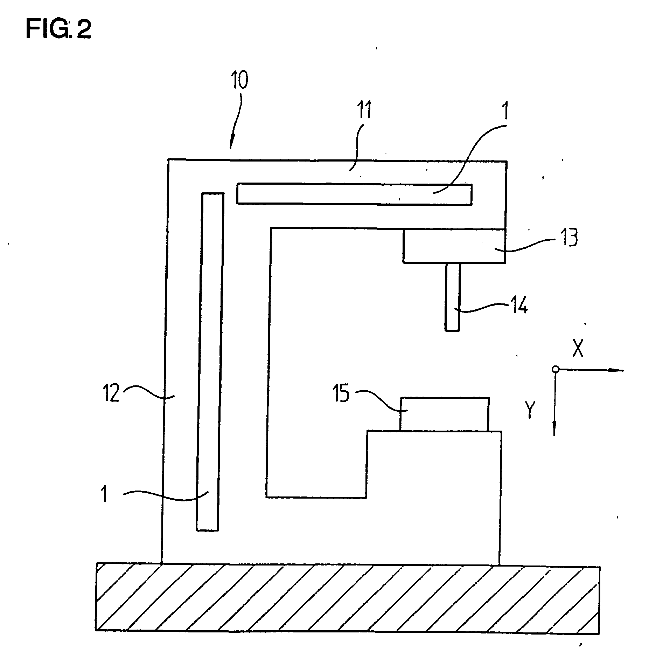

In Figur 2 ist eine Anwendung der beschriebenen Temperatursensoren 1 gezeigt. Eine Werkzeugmaschine 10 vom C-Typ hat zwei Arme 11 und 12 in Richtung X und Y. Durch die Rotation einer Spindel 14 im Festlager 13 entsteht Wärme, die sich über Arm 11 auch auf Arm 12 ausbreiten kann. Beide Arme 11,12 dehnen sich dadurch aus und verändern den Abstand zwischen Spindel 14 und Werkstück 15 in unerwünschter Weise. Mit den Temperatursensoren 1 wird das Temperaturprofil der Arme 11 und 12 im wesentlichen über deren gesamte Länge erfaßt und damit eine Korrektur ihrer Längenausdehnung möglich.

## Patentansprüche

1. Vorrichtung zur Erfassung thermisch bedingter Längenausdehnungen eines Maschinenteils (5) etwa einer Werkzeugmaschine, mit einem längs einer Ausdehnungsrichtung (X) verlegten Temperatursensor (1) aus einem ersten metallischen Leiter (3), dessen elektrischer Widerstand eine Lineare Funktion der mittleren Temperatur eines zu überwachenden Bereichs ist, **dadurch gekennzeichnet, daß** neben dem ersten metallischen Leiter (3) Trimmbahnen (T1 - TN) in Form von weiteren metallischen Leitern liegen, die wahlweise über elektrische Verbindungen (S1 - SN) mit dem ersten metallischen Leiter (3) verschaltbar sind, und deren elektrischer Widerstand R1 - RN ebenfalls eine lineare Funktion der mittleren Temperatur des zu überwachenden Bereiches ist.

2. Vorrichtung nach Anspruch 1, **dadurch gekennzeichnet, daß** die Länge (L) des Temperatursensors (1) längs der Ausdehnungsrichtung (X) mindestens das zwanzigfache seiner Breite (W) beträgt.

3. Vorrichtung nach Anspruch 1, **dadurch gekennzeichnet, daß** die Trimmbahnen (T1 - TN) abgestufte elektrische Widerstände aufweisen, und der elektrische Gesamtwiderstand des Temperatursensors (1) mit der Genauigkeit des kleinsten Widerstandes einer Trimmbahn (T1 - TN) einstellbar ist.

4. Vorrichtung nach Anspruch 1, **dadurch gekennzeichnet, daß** der erste metallische Leiter (3) und die Trimmbahnen (T1 - TN) als Leiterbahnen auf einem gemeinsamen Leiterplattensubstrat (2) ausgebildet sind.

5. Vorrichtung nach Anspruch 1, **dadurch gekennzeichnet, daß** der erste metallische Leiter (3) und die Trimmbahnen (T1 - TN) aus Kupfer bestehen.

## Claims

1. A device for detecting thermally caused linear extensions of a part of a machine (5), for example of a machine tool, comprising a temperature sensor (1) running along an expansion direction (X) of a first metallic conductor (3), the electric resistance of which is a linear function of the mean temperature of an area, which is to be monitored, **characterized in that** trimming tracks (T1-TN) in the form of further metallic conductors, are located next to the first metallic conductor (3) said trimming tracks (T1-TN) being capable of being optionally connected to the first metallic conductor (3) via electrical connections (S1-SN) and the electric resistance R1-RN is also a linear function of the mean temperature of the area, which is to be monitored.

2. The device according to claim 1, **characterized in that** the length (L) of the temperature sensor (1) along the expansion direction (X) is at least twenty times of its width (W).

3. The device according to claim 1, **characterized in that** the trimming tracks (T1-TN) encompass graded electrical resistances and **in that** the total electrical resistance of the temperature sensor (1) can be adjusted with the accuracy of the smallest resistance of a trimming track (T1-TN).

4. The device according to claim 1, **characterized in that** the first metallic conductor (3) and the trimming tracks (T1-TN) are embodied as printed circuit board tracks on a common printed circuit board substrate (2).

5. The device according to claim 1, **characterized in that** the first metallic conductor (3) and the trimming tracks (T1-TN) are made up of copper.

## Revendications

1. Dispositif pour la détection thermique d'extensions de longueur d'origine thermique sur une pièce de machine (5), en particulier d'une machine-outil, avec un détecteur de température (1) disposé le long d'un sens d'extension (X), constitué d'un conducteur métallique (3) dont la résistance électrique est une fonction linéaire de la température moyenne d'une région à surveiller, **caractérisé en ce que** qu'à côté du premier conducteur métallique (3) sont disposées des pistes d'équilibrage (T1-TN) conçues comme des conducteurs métalliques supplémentaires, qui peuvent être connectées au choix au premier conducteur métallique (3) par le biais de liaison électrique (S1-SN) et dont la résistance électrique R1 - RN est également une fonction linéaire de la température moyenne de la région à surveiller.

2. Dispositif selon la revendication 1, **caractérisé en ce que** la longueur (L) du détecteur de température (1) équivaut au moins à vingt fois sa largeur (W) le long du sens d'extension (X).

3. Dispositif selon la revendication 1, **caractérisé en ce que** les pistes d'équilibrage (T1-TN) comportent des résistances électriques par paliers, et la résistance globale du détecteur de température (1) peut être réglé avec la précision de la plus petite résistance d'une piste d'équilibrage (T1-TN).

4. Dispositif selon la revendication 1, **caractérisé en ce que** le premier conducteur métallique (3) et les pistes d'équilibrage (T1-TN) sont conçus comme des pistes conductrices sur un substrat de plaque conductrice commun (2).

5. Dispositif selon la revendication 1, **caractérisé en ce que** le premier conducteur métallique (3) et les pistes conductrices (T1-TN) sont constitués de cuivre.
